# EUROPÄISCHE PATENTANMELDUNG

(11) **EP 0 592 714 A1**
(43) Veröffentlichungstag der Anmeldung: **20.04.1994**
(21) Anmeldenummer: 92117581.6
(22) Anmeldetag: 15.10.1992
(51) Int. Cl.: B60R 19/26, B60R 19/36

(54) **Vorrichtung zum Abfangen von Stössen**

(71) Anmelder: Chang, Hong-Sun, Taoyuan (TW)
(72) Erfinder: Chang, Hong-Sun, Taoyuan (TW)
(74) Vertreter: Fritz, Edmund Lothar, Dipl.-Chem.

(57) **Zusammenfassung**

Die vorliegende Erfindung betrifft eine Vorrichtung zum Abfangen von Stößen an einem Automobil mit einem Stoßfänger (C), einem vorderen Träger (10), einem hinteren Träger (20), der mit dem Chassis verbunden ist und wenigstens einem Scherengestänge (30, 40) mit X-förmig sich kreuzenden Scherenarmen, die in ihrem Kreuzungsbereich miteinander gelenkig verbunden sind. Die erfindungsgemäße Vorrichtung ermöglicht es, Stoßkräfte, die in einer beliebigen Richtung auf den Stoßfänger (C) einwirken, so abzufangen, daß der vordere Träger (10) sich in einer parallelen synchronen Bewegung in Richtung auf den hinteren Träger (20) bewegt. Außerdem ist ein Dämpfungselement (60) vorgesehen, das zum Beispiel eine Hydraulik-Zylinder-Anordnung ist, die in axialer Verlängerung zum Zentrum des X-förmigen Scherengestänges angeordnet ist.

## Beschreibung

### Technologischer Hintergrund der Erfindung

Die vorliegende Erfindung betrifft eine Verbesserung an Stoßfängern für Automobile. Der Erfindung liegt insbesondere die Aufgabe zugrunde, aus verschiedenen Winkeln auf einen Stoßfänger einwirkende Stoßkräfte in eine parallele homogene Kraft umzuwandeln. Durch diese Harmonisierung wird der schädigende Einfluß von Stößen auf die Fahrzeugkarosserie verringert.

### Beschreibung des bekannten Standes der Technik

Das Hauptziel eines Stoßfängers oder einer Stoßstange eines Automobils liegt darin, Zerstörungen an der Karosserie oder mechanischen Teilen des Fahrzeugs aufgrund von Stößen zu verhindern und Fahrer und Insassen des Fahrzeugs zu schützen. Es ist daher sehr wichtig, daß der Stoßfänger so aufgebaut ist, daß er diesen Sicherheitsanforderungen weitgehend genügt. Als wesentliches Element für einen Stoßfänger kann man zum Beispiel Federn, pneumatische Zylinder, hydraulische Zylinder, flexible Polster aus Kunststoff, Gummi oder Luftpolster verwenden, die die Stöße abfangen. Derartige herkömmliche Stoßfänger können im allgemeinem nur Stößen widerstehen, die frontal erfolgen, das heißt in axialer Richtung der Dämpfungseinrichtung des Stoßfängers. Wenn die Stoßkraft aus seitlicher Richtung auftrifft, können die herkömmlichen Stoßfänger nicht in synchroner Bewegung ausweichen. Der Stoßfänger deformiert sich daher und stellt sich schief, das heißt im allgemeinen, daß der Stoßfänger am einen Ende komprimiert wird und am anderen Ende hervortritt. Dadurch wird der Stoßfänger selbst oder andere mechanische Teile zerstört. Hierin liegt der schwerwiegendste Nachteil herkömmlicher Stoßfänger. Es ist Aufgabe der Erfindung, diesen Nachteil zu überwinden.

Die Erfindung ist das Ergebnis einer langjährigen Entwicklung und von Erfahrungen, die bei der Herstellung einer sicheren Stoßfängeranordnung gesammelt werden konnten. Der erfindungsgemäße Stoßfänger ist so konstruiert, daß er sich in einer synchronen Parallelbewegung zurückbewegt, wenn eine Stoßkraft einwirkt, unabhängig von der Richtung dieser Stoßkraft. Es hat sich gezeigt, daß der erfindungsgemäße Stoßfänger problemlos arbeitet. Der Gegenstand der Erfindung stellt somit eine wesentliche Verbesserung dar.

### Zusammenfassende Darstellung der Erfindung

Kern der Erfindung ist eine Vorrichtung zum Abfangen von Stößen an einem Automobil mit wenigstens einem Scherengestänge mit X-förmig angeordneten Scherenarmen, die zwischen einem vorderen und einem hinteren Träger angeordnet sind, wobei je ein Ende je eines Scherenarms mit jeweils einem Träger fest verbunden ist und das jeweils andere Ende des jeweiligen Scherenarms eine Gleitvorrichtung aufweist, die in einer Nut eines der Träger jeweils in Längsrichtung gleiten kann. Aufgrund dieser Anordnung der Scherengestänge führt eine aus beliebiger Richtung (ausgenommen 180° parallel zum Stoßfänger) auf den Stoßfänger einwirkende Stoßkraft zu einer parallelen synchronen Bewegung des vorderen Trägers, wodurch die Stoßeinwirkung verringert wird.

Im folgenden wird die vorliegende Erfindung anhand von Ausführungsbeispielen unter Bezugnahme auf die beiliegenden Zeichnungen näher beschrieben. Dabei zeigen
- Fig. 1: eine Explosionsdarstellung einer erfindungsgemäßen Vorrichtung;
- Fig. 2: eine Ansicht einer erfindungsgemäßen Vorrichtung von unten;
- Fig. 3: einen Horizontalschnitt durch eine Vorrichtung gemäß Fig. 2;
- Fig. 4: einen Schnitt entlang der Linie A von Fig. 3;
- Fig. 5: einen Schnitt entlang der Linie B von Fig. 3;
- Fig. 6: ist eine entsprechende Schnittdarstellung gemäß einer Variante der Erfindung.

### Detaillierte Beschreibung der Erfindung

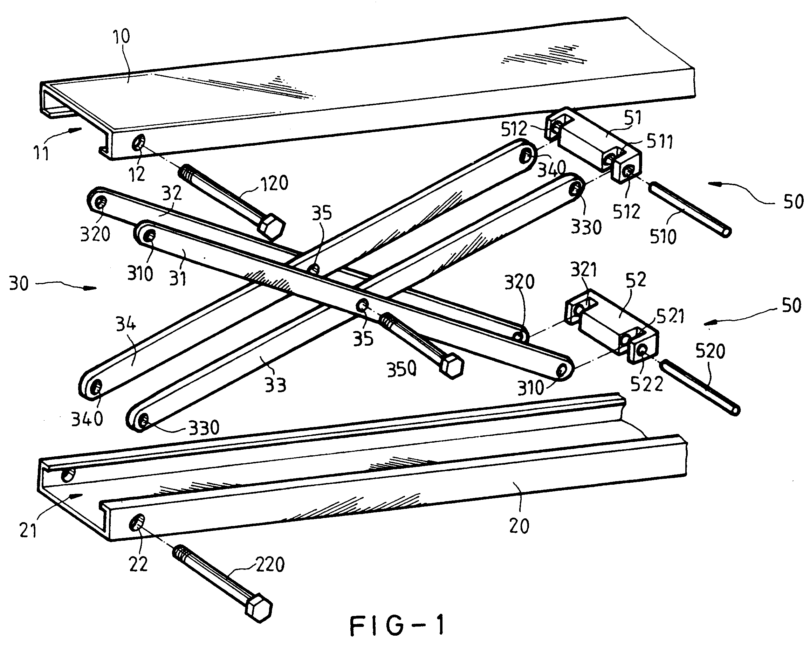

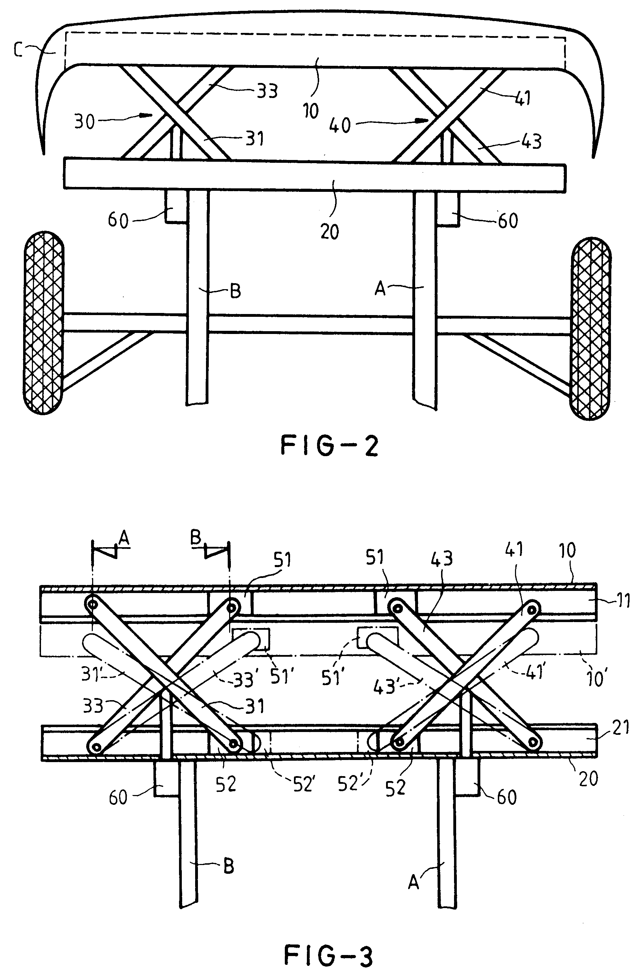

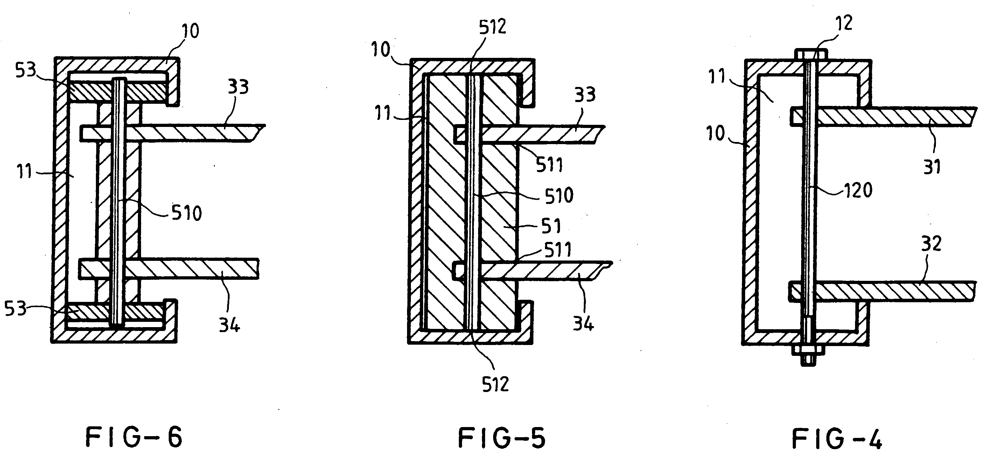

Wie aus den Figuren 1 und 2 ersichtlich ist, umfaßt die erfindungsgemäße Vorrichtung einen vorderen Träger 10, einen hinteren Träger 20, wenigstens eine Gruppe X-förmig sich kreuzende Arme eines Scherengestänges 30, eine Gleitvorrichtung 50 und wenigstens ein Dämpfungselement 60 (siehe Fig. 2). Frontseitig ist der vordere Träger 10 mit dem Stoßfänger C verbunden. Der vordere Träger weist eine Nut 11 auf (siehe Fig. 1) und ist im Profil etwa C-förmig (siehe Fig. 4). In den gegenüberliegenden Flanken des C-Profils sind jeweils Löcher 12 (siehe Fig. 1 und Fig. 4). Mit Hilfe von Schrauben 120 werden die Arme 31, 32 des Scherengestänges 30, 40 an ihren Enden am Träger 12 befestigt. Wie man aus Fig. 5 sieht, ist jeweils ein Paar Arme 33, 34 des Scherengestänges an den Enden mit einem Gleitklotz 51 verbunden, der von der Nut 11 des Trägers 10 aufgenommen wird und in dieser in Längsrichtung beweglich ist. Rückseitig ist der hintere Träger 20 mit den Rahmenträgern A und B des Chassis verbunden. Der hintere Träger 20 entspricht in seiner Form als C-Profil dem vorderen Träger 10. Entsprechend ist eine Nut 21 vorhanden, die einen Gleitklotz 52 aufnimmt, der in dieser in Längsrichtung verschieblich ist. Der Gleitklotz 52 ist mit den Enden zweier Arme 31, 32 des Scherengestänges verbunden. Die unteren Enden der beiden Arme 33, 34 des Scherengestänges, die die beiden Arme 31, 32 kreuzen, sind mittels der Schraube 220 mit dem Träger 20 verbunden. Die Schraube 220 ist durch die Löcher 22 in den gegenüberliegenden Flanken des C-Profils und durch die Löcher 330, 340 in den Armen des Scherengestänges hindurchgesteckt. Wie man aus Fig. 1 erkennt, bilden somit zwei Paare sich X-förmig kreuzender Arme ein Scherengestänge 30, wobei jedes Paar Arme am einen Ende mit einem Träger fest verbunden ist und am jeweils anderen Ende mit einem Gleitklotz verbunden ist, wobei die Gleitklötze 51, 52, die in den Trägern 10 bzw. 20 gleiten, einander gegenüberliegen.

Die Arme eines X-förmigen Scherengestänges sind jeweils mittig durch einen Stift 350 miteinander verbunden, der durch Löcher 35 in den Armen hindurchgesteckt ist, wobei der Stift 350 quasi die Gelenkachse eines Scherengestänges bildet. Die Bewegung der Scherengestänge beim Abfangen von Stößen ist aus Fig. 3 erkennbar, in der die Scherenarme 31', 33', 41', 43', der Träger 10' und die Gleitklötze 51', 52' in einer zweiten Position gestrichelt dargestellt sind, die sich ergibt, wenn der Träger 10 sich parallel in Richtung auf den anderen Träger 20 hin verschiebt.

An beiden Enden der Arme des Scherengestänges sind jeweils Löcher 310, 320, 330, 340, 410, 420, 430, 440 für die Schrauben 120, 220 bzw. die Stifte 510, 520 vorgesehen. Die Arme 31, 41 bzw. 32, 42 sind jeweils mit dem unteren Gleitklotz 52 verbunden, der sich in der Nut 21 des hinteren Trägers 20 befindet (siehe Fig. 3). Die hinteren Enden der Arme 33, 43 der Scherengestänge und der Arme 34, 44 sind mit dem oberen Gleitklotz 51 verbunden, der von der Nut 11 des vorderen Trägers aufgenommen wird (siehe auch Fig. 5). Die vorderen Enden der ersten Arme 31, 41 und der zweiten Arme 32, 42 sind in der Nut 11 des vorderen Trägers 10 befestigt (siehe Fig. 1 und auch Fig. 4). Die vorderen Enden der dritten Arme 33, 43 und der vierten Arme 34, 44 sind in der Nut 21 des hinteren Trägers 20 mittels der Schraube 220 befestigt. Die X-förmig angeordneten Scherengestänge 30, 40 verbinden somit den vorderen Träger 10 und den hinteren Träger 20 (siehe Fig. 2), wobei das Scherengestänge jeweils an einer Seite (in dem Ausführungsbeispiel außen) fest mit den Trägern verbunden ist, aber an der anderen Seite die Enden der Arme des Scherengestänges über die Gleitklötze in Längsrichtung frei gleiten können.

Die Gleitvorrichtung 50 umfaßt einen oberen Gleitklotz 51 und einen unteren Gleitklotz 52. Jeder Gleitklotz weist zwei Schlitze 511, 521 auf und zwei Bohrungen 512, 522, die durch den Gleitklotz und durch die Schlitze hindurchgehen, um die Befestigungsstifte 510, 520 aufzunehmen, mittels derer die Arme des Scherengestänges mit den Gleitklötzen verbunden werden. Die ersten und zweiten Arme 31, 32 und 41, 42 erstrecken sich in den Schlitz 521, 321 und werden dort mittels des Stifts 520 befestigt. Der Gleitklotz 52 bewegt sich in der Nut 21 nach rechts oder links. Die dritten und vierten Arme 33, 34 bzw. 43, 44 erstrecken sich in den Schlitz 511 und werden dort mittels des Stifts 510 befestigt. Diese Arme bewegen sich mit dem Klotz 51 in der Nut 11 nach rechts oder links. Alternativ zu dieser Ausbildung mit Gleitklötzen können auch Rollen 53 oder andere geeignete Bauteile in der Nut 11 angeordnet sein. Die Rollen bewegen sich in gleicher Weise wie die Klötze in Längsrichtung in der Nut (siehe die Ausführungsvariante gemäß Fig. 6).

Als Dämpfungselement 60 (siehe Fig. 2 und Fig. 3) kann beispielsweise eine Feder, ein Luftpolster oder eine Hydraulik-Zylinder-Anordnung angeordnet sein, die Stöße absorbiert. Das Dämpfungselement 60 kann etwa in axialer Verlängerung zum Zentrum der X-förmigen Scherengestänge angeordnet sein, wie dies in dem Ausführungsbeispiel gemäß den Figuren 2 und 3 dargestellt ist. Es kann aber auch in der Nut des vorderen oder des hinteren Trägers angeordnet sein oder auch zwischen vorderem Träger 10 und hinterem Träger 20.

Eine Stoßkraft, die aus irgendeiner Richtung von vorn oder von der Seite auf den Stoßfänger C einwirkt, läßt die erfindungsgemäße Vorrichtung in Aktion treten. Zwei Enden der sich synchron bewegenden X-förmigen Scherengestänge 30, 40 (siehe Fig. 1) sind jeweils am vorderen Träger 10 bzw. am hinteren Träger 20 befestigt. Die Arme eines Scherengestänges können ihren Winkel zueinander verändern, wobei der Kreuzungswinkel stumpfer wird, wenn der Abstand zwischen vorderem Träger 10 und hinterem Träger 20 sich verringert (siehe Fig. 3). Dabei bewegen sich die Gleitklötze 51, 52 der Scherengestänge 30, 40 aufeinander zu und gleiten in den Nuten 11, 21 des vorderen bzw. des hinteren Trägers. Die ersten Arme 31, 41 und die dritten Arme 33, 43 der beiden Scherengestänge bewegen sich jeweils parallel und synchron. Der obere Gleitklotz 51 bewegt sich in die Position 51' und der untere Gleitklotz 52 bewegt sich in die Position 52' gemäß Fig. 3. Gleich in welcher Richtung eine Kraft auf den vorderen Träger 10 einwirkt, wird diese Kraft gleichmäßig in den Träger eingeleitet und verteilt und über die Scherengestänge bewegt sich der vordere Träger 10 synchron und parallel auf den hinteren Träger 20 zu. Die Kraft wird darüberhinaus von dem Dämpfungselement 60 absorbiert, wobei anders als bei herkömmlichen Stoßfängern auch bei einem ungleichmäßigen Stoß die Stoßkraft gleichmäßig absorbiert wird. Hierin liegt der Vorteil der Erfindung.

Die vorbeschriebene Vorrichtung bezieht sich lediglich auf ein Ausführungsbeispiel der Erfindung, das im Rahmen des Erfindungsgedankens variiert werden kann, ohne daß der Schutzbereich der Anmeldung verlassen wird. Der Gegenstand der Erfindung wurde bislang nicht veröffentlicht, so daß die Neuheit als Voraussetzung für eine Patentierung gegeben ist.

### Bezugszeichenliste

- A: Rahmenstrebe
- B: Rahmenstrebe
- C: Stoßstange, Stoßfänger
- 10: vorderer Träger
- 11: Nut
- 12: Loch
- 120: Stift, Schraube
- 20: hinterer Träger
- 21: Nut
- 22: Loch
- 220: Schraube
- 30: X-förmiges Scherengestänge
- 31: erster Arm der Schere
- 310: Loch
- 32: zweiter Arm der Schere
- 320: Loch
- 33: dritter Arm der Schere
- 330: Loch
- 34: vierter Arm der Schere
- 340: Loch
- 40: X-förmiges Scherengestänge
- 41: erster Arm der Schere
- 410: Loch
- 42: zweiter Arm der Schere
- 420: Loch
- 43: dritter Arm der Schere
- 430: Loch
- 44: vierter Arm der Schere
- 440: Loch
- 50: Gleitvorrichtung
- 51: oberer Gleitklotz
- 510: Befestigungsstift
- 511: Schlitz
- 512: Bohrung
- 52: unterer Gleitklotz
- 520: Befestigungsstift
- 521: Schlitz
- 522: Bohrung
- 5: 3 Rolle
- 60: Dämpfungselement

## Patentansprüche

1. Vorrichtung zum Abfangen von Stößen an einem Automobil mit einem im Frontbereich des Fahrzeugs angeordneten Stoßfänger (C), dadurch gekennzeichnet, daß ein im Bereich des Stoßfängers (C) angeordneter vorderer Träger (10) vorgesehen ist, ein parallel zu diesem vorderen Träger (10) mit Abstand angeordneter hinterer Träger (20), der mit dem Chassis des Fahrzeugs verbunden ist und wenigstens ein zwischen vorderem Träger (10) und hinterem Träger (20) angeordnetes Scherengestänge (30, 40) mit X-förmig sich kreuzenden Scherenarmen (31, 33), wobei ein Arm (31) des Scherengestänges an seinem einen Ende mit dem vorderen Träger (11) fest verbunden ist, der andere Arm (33) an seinem einen Ende mit dem hinteren Träger (20) fest verbunden ist, der Arm (31) an seinem anderen Ende eine Gleitvorrichtung (52) aufweist, die in Längsrichtung des Trägers (20) gleitet und der Arm (33) an seinem anderen Ende eine Gleitvorrichtung (51) aufweist, die in Längsrichtung des Trägers (11) gleitet, wobei die Arme (31, 33) in ihrem Kreuzungsbereich durch ein Gelenk verbunden sind.

2. Vorrichtung zum Abfangen von Stößen an einem Automobil nach Anspruch 1, dadurch gekennzeichnet, daß ein Dämpfungselement (60) vorgesehen ist, das zwischen dem vorderen Träger (10) und dem hinteren Träger (20) angeordnet ist.

3. Vorrichtung zum Abfangen von Stößen an einem Automobil nach Anspruch 1, dadurch gekennzeichnet, daß ein Dämpfungselement (60) vorgesehen ist, das etwa in axialer Verlängerung zum Zentrum des Scherengestänges (30) angeordnet und mit einer Rahmenstrebe (A, B) verbunden ist.

4. Vorrichtung zum Abfangen von Stößen an einem Automobil nach einem der Ansprüche 1 bis 3, dadurch gekennzeichnet, daß zwei Scherengestänge (30, 40) mit X-förmig sich kreuzenden Scherenarmen nebeneinander zwischen vorderem Träger (10) und hinterem Träger (20) angeordnet sind.

5. Vorrichtung zum Abfangen von Stößen an einem Automobil nach einem der Ansprüche 1 bis 4, dadurch gekennzeichnet, daß jedes Scherengestänge (30, 40) zwei Paare paralleler Scherenarme (31, 32 bzw. 33, 34) umfaßt, die im Bereich ihrer Gelenkachse durch einen Stift (350) verbunden sind.

6. Vorrichtung zum Abfangen von Stößen an einem Automobil nach einem der Ansprüche 1 bis 5, dadurch gekennzeichnet, daß die Träger (10, 20) jeweils Nuten (11, 21) aufweisen, die die Gleitvorrichtungen (51, 52) der Scherengestänge (30, 40) in Längsrichtung verschiebbar aufnehmen.

7. Vorrichtung zum Abfangen von Stößen an einem Automobil nach einem der Ansprüche 1 bis 6, dadurch gekennzeichnet, daß als Gleitvorrichtung Gleitklötze (51, 52) dienen, die mit den Enden der Arme (31, 32 bzw. 33, 34) der Scherengestänge über Stifte (510, 520) verbunden sind.

8. Vorrichtung zum Abfangen von Stößen an einem Automobil nach einem der Ansprüche 1 bis 7, dadurch gekennzeichnet, daß die Gleitklötze (51, 52) Schlitze (511, 521) aufweisen, die die Enden der Arme des Scherengestänges aufnehmen.

9. Vorrichtung zum Abfangen von Stößen an einem Automobil nach einem der Ansprüche 1 bis 8, dadurch gekennzeichnet, daß als Gleitvorrichtung Gleitrollen (53) dienen, die in den Nuten (11, 21) der im Profil etwa C-förmigen Träger (10, 20) geführt sind.

10. Vorrichtung zum Abfangen von Stößen an einem Automobil nach einem der Ansprüche 1 bis 9, dadurch gekennzeichnet, daß der vordere Träger (10) in dem Stoßfänger (C) aufgenommen ist und der hintere Träger (20) an Rahmenstreben (A, B) befestigt ist, die zu diesem rechtwinklig verlaufen.
